# EUROPÄISCHE PATENTSCHRIFT

(11) **EP 0 965 545 B1**
(45) Veröffentlichungstag und Bekanntmachung des Hinweises auf die Patenterteilung: **26.04.2006**
(21) Anmeldenummer: 99111553.6
(22) Anmeldetag: 15.06.1999
(51) Int. Cl.: B65H 7/12, G01B 7/06

(54) **Einrichtung zur kapazitiven Doppelbogenkontrolle**
Device for capacitive control of double sheet
Dispositif de contrôle capacitif de double feuille

(30) Priorität: 17.06.1998 DE 19826909
(43) Veröffentlichungstag der Anmeldung: 22.12.1999
(73) Patentinhaber: Koenig & Bauer Aktiengesellschaft, 97080 Würzburg (DE)
(72) Erfinder: Jentzsch, Arndt Dipl.-Ing., 01640 Coswig (DE); Buschmann, Falk Dipl.-Ing., 01640 Coswig (DE)

(56) Entgegenhaltungen:
- DE-A- 3 344 842
- DE-A- 19 549 351
- US-A- 5 198 777
- PATENT ABSTRACTS OF JAPAN vol. 017, no. 155 (M-1388), 26. März 1993 (1993-03-26) & JP 04 323147 A (BROTHER IND LTD), 12. November 1992 (1992-11-12)
- PATENT ABSTRACTS OF JAPAN vol. 016, no. 223 (M-1253), 25. Mai 1992 (1992-05-25) & JP 04 041349 A (IISUTOMAN KODATSUKU JIYAPAN KK), 12. Februar 1992 (1992-02-12)

## Beschreibung

Die Erfindung betrifft eine Einrichtung zur kapazitiven Doppelbogenkontrolle für unterschiedliche Bedruckstoffstärken an Druckmaschinen.

Durch die DE 195 49 351 A1 ist eine Vorrichtung zur Kontrolle von Bogen, die von einem Stapel vereinzelt in eine bogenverarbeitende Maschine eingezogen werden, bekannt. An der bogenverarbeitenden Maschine ist wenigstens ein auf die Bogen gerichteter optischer Messwertgeber an einer Traverse angeordnet, dessen Ausgangssignal hinsichtlich seiner Amplitude auf Vorliegen eines Einfach- oder Mehrfachbogens in einer Auswerteeinheit bewertet wird. Zusätzlich ist wenigstens ein kapazitiver Messwertgeber vorgesehen, dessen Ausgangssignal ebenfalls in der Auswerteeinheit hinsichtlich der Amplitude auf Vorliegen eines Einfach- oder Mehrfachbogens bewertet wird.

In der Auswerteeinheit wird in Abhängigkeit der Amplitude des Ausgangssignals des optischen und/oder kapazitiven Messwertgebers jeweils nur ein Ausgangssignal zur Entscheidung, ob ein Einfach- oder Mehrfachbogen vorliegt, herangezogen.

Dabei ist, da die Auflösung der kapazitiv arbeitenden Einrichtung geringer als die der optischen Einrichtung ist, die kapazitiv arbeitende Einrichtung nur für die Kontrolle von relativ dicken Bedruckstoffen (Karton) verwendbar, d.h. dass diese Einrichtung für dünnere Bedruckstoffe nicht einsetzbar ist. Umgekehrt ist die Verwendung der optischen Einrichtung nur für dünne Bedruckstoffe möglich.

Nachteilig ist die Verwendung von zwei Einrichtungen zur Doppelbogenkontrolle von unterschiedlichen Bedruckstoffstärken.

Aus der JP 4 323 147 ist eine Einrichtung zur kapazitiven Doppelbogenkontrolle bekannt, die optische Bogenkontrolleinrichtungen ersetzen soll und eine oberhalb der zuzuführenden Bogen angeordnete Elektrode und eine unterhalb der Bogenbahn angeordnete Gegenelektrode aufweist.

Der Nachteil der Kontrolleinrichtung besteht darin, dass sie aufgrund ihrer großflächigen und eng beabstandeten Elektroden für eine Bogenkontrolle im Bogenschuppenbereich des Anlegers einer Bogendruckmaschine nicht geeignet ist.

Die Aufgabe der Erfindung ist es, ausgehend von den Nachteilen des Standes der Technik eine kapazitiv arbeitende Einrichtung zur Doppelbogenkontrolle für unterschiedliche Bedruckstoffstärken zu schaffen.

Erfindungsgemäß wird die Aufgabe durch das Kennzeichen des ersten Patentanspruches gelöst. Zweckmäßige Ausgestaltungen sind in den Unteransprüchen offenbart.

Nachfolgend wird die Erfindung an einem Ausführungsbeispiel näher erläutert. In der Zeichnung zeigt
- Fig. 1: Anlegtisch Seitenansicht Variante 1
- Fig. 2: Anlegtisch Seitenansicht Variante 2
- Fig. 3: Anlegtisch Vorderansicht.

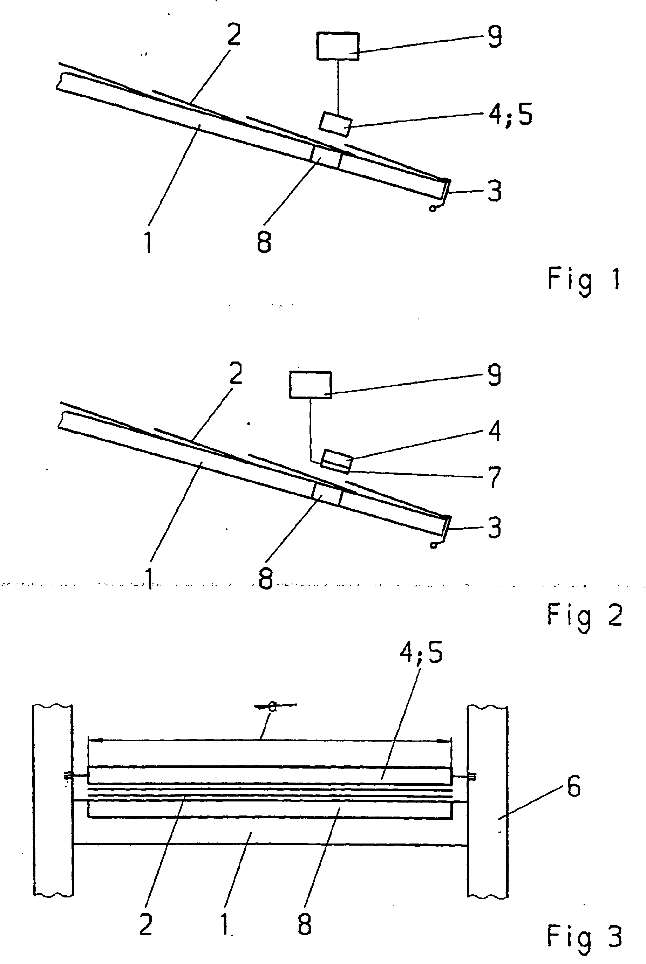

In den Figuren 1 bis 3 ist der Anlegtisch 1 einer Druckmaschine mit der erfinderischen Einrichtung zur kapazitiven Doppelbogenkontrolle dargestellt. Auf dem Anlegtisch 1 werden die von einem nicht dargestellten bekannten Anleger vereinzelten Bogen 2 in Schuppenformation zu Anlegmarken 3 transportiert.

Die in Schuppenformation über den Anlegtisch 1 transportierten Bogen 2 werden von der Einrichtung zur kapazitiven Doppelbogenkontrolle auf das Vorhandensein von Einfachbogen oder Doppelbogen kontrolliert. Die Einrichtung zur kapazitiven Doppelbogenkontrolle besteht aus einem Messwertgeber 5; 7, einer Gegenelektrode 8 und einer mit dem Messwertgeber 5; 7 verbundenen Auswerteschaltung 9.

Die Gegenelektrode 8 ist im Anlegtisch 1 unterhalb der Bahn der geschuppten Bogen 2 angeordnet bzw. der metallische Anlegtisch bildet die Gegenelektrode. Oberhalb der Schuppenformation der Bogen 2 ist eine über die Breite des Anlegtisches 1 sich erstreckende Traverse 4 angeordnet. Die Traverse 4 fungiert als Traversen-Messwertgeber 5 der Einrichtung zur kapazitiven Doppelbogenkontrolle.

Nach einer ersten Variante (Fig. 1) ist die Traverse 4 selbst der Messwertgeber und wird deshalb nachfolgend als Traversen-Messwertgeber 5 bezeichnet. Bei dieser Variante ist die Traverse 4 am Maschinengestell 6 isoliert angeordnet (Fig. 3).

Nach einer zweiten Variante (Fig. 2) ist an der Traverse 4 ein Messwertgeber 7 angeordnet. Ist dieser isoliert gegenüber der Traverse 4 angeordnet, entfällt die Isolierung der Traverse 4 gegenüber dem Maschinengestell 6. Vorzugsweise ist der Messwertgeber 7, bezogen auf die der geschuppten Bahn der Bogen zugewandten Traversenfläche, deckungsgleich. Dies bezieht sich insbesondere auf die Breite (unter Breite wird dabei ein Maß quer zur Bogenlaufrichtung verstanden).

Zur Vermeidung von Einstellhandlungen bei Wechsel des Formates des zu bedruckenden Bogens 2 entspricht die Breite des Messwertgebers 7 maximal dem minimalen Bogenformat.

### Bezugszeichenaufstellung

- 1: Anlegtisch
- 2: Bogen
- 3: Anlegmarke
- 4: Traverse
- 5: Traversen-Messwertgeber
- 8: Maschinengestell
- 7: Messwertgeber
- 8: Gegenelektrode
- 9: Auswerteschaltung

## Patentansprüche

1. Einrichtung zur kapazitiven Doppelbogenkontrolle für unterschiedliche Bedruckstoffstärken an Druckmaschinen mit einem oberhalb der den Anlegmarken über einen Anlegtisch zuzuführenden Bogen angeordneten Messwertgeber, einer unterhalb der zuzuführenden Bogen in den Anlegtisch integrierten Gegenelektrode und einer mit dem Messwertgeber verbundenen Auswerteschaltung,
**dadurch gekennzeichnet, dass** zur Erhöhung der Messwertauflösung für dünnere Bedruckstoffe
- eine sich über die Breite des Anlegtisches (1) erstreckende vorhandene Traverse (4) als Traversen-Messwertgeber (5) fungiert und die Gegenelektrode (8) der Traversenabmessung angepaßt ist oder
- an der Traverse (4) ein Messwertgeber (7) angeordnet ist.

2. Einrichtung zur kapazitiven Doppelbogenkontrolle nach Anspruch 1, **dadurch gekennzeichnet, dass** die als Traversen-Messwertgeber (5) ausgebildete Traverse (4) gegenüber dem Maschinengestell (6) isoliert angeordnet ist.

3. Einrichtung zur kapazitiven Doppelbogenkontrolle nach Anspruch 1, **dadurch gekennzeichnet, dass** der Messwertgeber (7) an der Traverse (4) gegenüber derselben isoliert angeordnet ist.

4. Einrichtung zur kapazitiven Doppelbogenkontrolle nach Anspruch 3, **dadurch gekennzeichnet, dass** der Messwertgeber (7) bezüglich den den Bogen zugewandten Flächen mit der entsprechenden Traversenfläche deckungsgleich ist.

5. Einrichtung zur kapazitiven Doppelbogenkontrolle nach Anspruch 1, **dadurch gekennzeichnet, dass** die Breite des Messwertgebers (7) und der Gegenelektrode (8) gleich dem minimal zu bedruckenden Bogenformat ist.

## Revendications

1. Installation de contrôle capacitif de double feuille pour des épaisseurs différentes de matières d'impression dans des machines d'impression comportant un capteur de valeurs de mesure, installé au-dessus des feuilles fournies au repère de marge d'un margeur, une contre-électrode intégrée dans le margeur en dessous de la feuille à fournir et d'un circuit d'exploitation relié au capteur de valeur de mesure,
**caractérisée en ce que**
pour augmenter la résolution de la valeur de mesure pour des matières d'impression plus minces
- une traverse (4) qui s'étend sur la largeur du margeur (1), fonctionne comme traverse avec un capteur de valeurs de mesure (5) et la contre-électrode (8) est adaptée aux dimensions de la traverse ou
- la traverse (4) comporte un capteur de valeur de mesure (7).

2. Installation de contrôle capacitif de double feuille selon la revendication 1,
**caractérisée en ce que**
la traverse (4) réalisée comme capteur de valeurs de mesure de traverse (5), est installée de manière isolée en regard du bâti (6) de la machine.

3. Installation de contrôle capacitif de double feuille selon la revendication 1,
**caractérisée en ce que**
le capteur de valeurs de mesure (7) est installé de manière isolée par rapport à la traverse (4).

4. Installation de contrôle capacitif de double feuille selon la revendication 3,
**caractérisée en ce que**
le capteur de valeurs de mesure (7) coïncide du point de vue des surfaces tournées vers les feuilles avec la surface transversale correspondante.

5. Installation de contrôle capacitif de double feuille selon la revendication 1,
**caractérisée en ce que**
la largeur du capteur de valeurs de mesure (7) et de la contre-électrode (8) sont égales au minimum du format de feuille à imprimer.

## Claims

1. Equipment for capacitive double-sheet checking for different printed material thicknesses at printing machines with a measurement value transmitter arranged above the sheets to be fed to the lay marks by way of a feed table, a counter-electrode integrated in the feed table below the sheets to be fed and an evaluating circuit connected with the measurement value transmitter, **characterised in that** for increasing the measurement value resolution for thinner printed materials
- a cross member (4) which is present and extends over the width of the feed table (1), functions as a cross member measurement value transmitter (5) and the counter-electrode (8) is adapted to the cross member dimension, or
- a measurement value transmitter (7) is arranged at the cross member (4).

2. Equipment for capacitive double-sheet checking according to claim 1, **characterised in that** the cross member (4) constructed as a cross member measurement value transmitter (5) is arranged to be insulated relative to the machine frame (6).

3. Equipment for capacitive double-sheet checking according to claim 1, **characterised in that** the measurement value transmitter (7) is arranged at the cross member (4) to be insulated relative to the same.

4. Equipment for capacitive double-sheet checking according to claim 3, **characterised in that** the measurement value transmitter (7) is congruent, with respect to the surfaces facing the sheets, with the corresponding cross member surface.

5. Equipment for capacitive double-sheet checking according to claim 1, **characterised in that** the width of the measurement value transmitter (7) and of the counter-electrode (8) is equal to the minimum sheet format to be printed.
